# FASCICULE DE BREVET EUROPEEN

(11) **EP 1 361 183 B1**
(45) Date de publication et mention de la délivrance du brevet: **15.09.2004**
(21) Numéro de dépôt: 03370018.8
(22) Date de dépôt: 14.04.2003
(51) Int. Cl.: B65G 47/51

(54) **Convoyeur de stockage**
Speicherförderer
Storage conveyor

(30) Priorité: 18.04.2002 FR 0204890
(43) Date de publication de la demande: 12.11.2003
(73) Titulaire: Société Industrielle d'Etudes et de Realisation Elétriques et Mecaniques S.I.E.R.M. Société Anonyme, 59560 Comines (FR)
(72) Inventeur: Remericq, Maurice, 59166 Bousbecque (FR)
(74) Mandataire: Tournel, Jean Louis (FR)

(56) Documents cités:
- EP-A- 0 292 378
- EP-A- 0 501 382
- EP-A- 0 551 613
- GB-A- 2 097 744
- US-A- 5 611 418

## Description

L'invention se rapporte un convoyeur de stockage provisoire destiné à une installation de regroupement d'articles plats.

Notamment, dans le domaine de l'emballage des produits d'hygiène que sont les couches, avant d'introduire les produits dans l'emballage, ces produits sont regroupés en lots.

Ainsi, entre la machine de production des articles plats qui délivre ceux-ci un par un et l'installation d'emballage, on intercale un convoyeur de stockage provisoire permettant de grouper les articles plats en lots.

On connaît un tel convoyeur de stockage (EP-A-0.292.378).

Généralement, le convoyeur circule à plat sur une table.

Ce convoyeur comprend :
- un lien sans fin portant extérieurement des palettes perpendiculaires au lien délimitant des réceptacles circulant entre deux organes de renvoi pour former deux brins, l'un dit de chargement et l'autre dit de déchargement,
- au moins deux moyens moteurs pour entraîner à des vitesses différentes chacun des brins précités,
- des moyens pour absorber les variations de longueur du lien sans fin et, situé sur le brin de chargement à un poste de chargement, un moyen d'ouverture puis de fermeture d'un réceptacle par déviation du dit brin.

Sur ce type de convoyeur, l'écartement des palettes est déterminé pour pincer le produit et éviter notamment qu'il quitte son logement.

Etant donné ce faible écartement de l'ordre parfois de quelques millimètres, on comprend bien la nécessité de dévier le brin de chargement au poste de chargement pour ouvrir la palette pour introduire l'article.

Ainsi, au droit d'un poste de chargement, on utilise un organe dit d'ouverture qui, écarté de la droite reliant les deux organes de renvoi précités, forme avec ceux-ci un triangle.

Plus cet organe de déviation est écarté plus l'ouverture de la palette est importante et plus il est facile d'introduire ces articles à grande vitesse.

Il faut se rappeler que la cadence d'introduction des articles peut être de l'ordre de cinq cents à mille articles par minute.

Ces articles sont alors projetés dans le réceptacle.

Dès que l'article est placé dans le réceptacle, il est impératif de rapprocher rapidement les palettes pour pincer le produit et le maintenir pendant son cheminement.

Dans la solution connue, l'ouverture des palettes étant importante, on fait appel à un deuxième organe situé en aval de cet organe de déviation et relativement prés pour accélérer la fermeture du réceptacle.

Comme on l'a indiqué plus haut, la géométrie du convoyeur se déforme pendant le fonctionnement.

En effet, lorsqu'on souhaite extraire un lot d'articles, il faut immobiliser le brin de déchargement le temps suffisant pour extraire les articles mais pendant ce temps là, les articles doivent être introduits, sans interruption, sur le brin de chargement.

Pour ce faire, les organes de renvoi sont montés sur des paliers flottants c'est à dire aptes à se déplacer suivant un axe.

En se déplaçant sur cet axe, on comprend bien que cela modifie l'angle formé par les brins en aval et en amont de l'organe de déviation.

C'est notamment pour cette raison qu'il faut prévoir un organe de fermeture.

Lorsque l'amplitude de la déformation est importante, cela joue sur l'encombrement.

L'invention se propose d'apporter une solution aux problèmes notamment évoqués plus haut.

A cet effet, l'invention a pour objet un convoyeur de stockage provisoire destiné à une installation de regroupement d'articles plats comprenant :
- un lien sans fin portant extérieurement des palettes perpendiculaires au lien délimitant des réceptacles, ce lien circulant entre deux organes de renvoi pour former deux brins, l'un dit de chargement et l'autre dit de déchargement,
- au moins deux moyens moteurs pour entraîner à des vitesses différentes chacun des brins précités,
- des moyens pour absorber les variations de longueur des brins du lien sans fin et, situé sur le brin de chargement à un poste dit de chargement, un moyen d'ouverture puis de fermeture d'un réceptacle par déviation du dit brin, ce moyen d'ouverture/fermeture comprenant un organe de déviation,
ce convoyeur étant caractérisé en ce que :
- l'organe de renvoi situé en aval du poste de chargement est de taille largement supérieure à l'autre organe de renvoi et
- la position de l'organe de déviation par rapport aux organes de renvoi est fixée pour que le brin de chargement situé en aval de l'organe de déviation soit parallèle au brin de déchargement tandis que la partie du brin de chargement situé entre cet organe de déviation et l'autre organe de renvoi est inclinée par rapport au brin de déchargement.

L'invention sera bien comprise à l'aide de la description ci-après faite à titre d'exemple non limitatif en regard du dessin ci-annexé qui représente schématiquement :

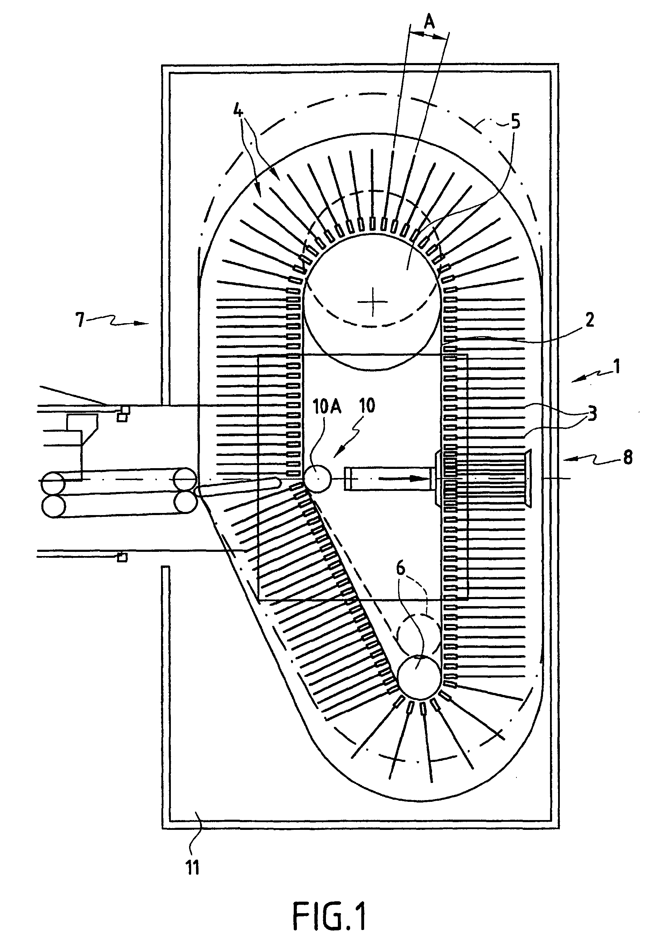

- figure 1 : vue de dessus d'un convoyeur,

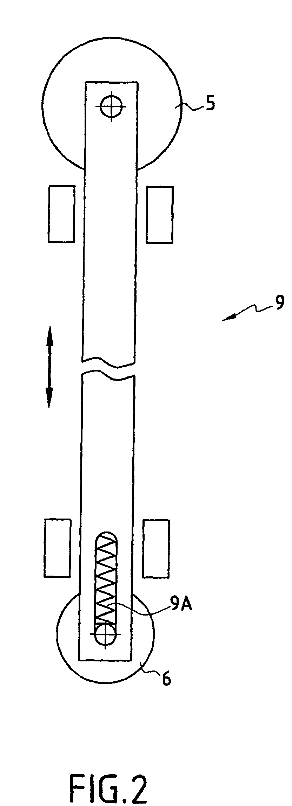

- figure 2 : vue partielle de dessous d'un convoyeur.

En se reportant au dessin, on voit un convoyeur 1 de stockage provisoire destiné à une installation de regroupement d'articles plats.

Classiquement, ce convoyeur 1 comprend :
- un lien 2 sans fin portant extérieurement des palettes 3 perpendiculaires au lien délimitant des réceptacles 4, ce lien circulant entre deux organes 5, 6 de renvoi pour former deux brins 7, 8, l'un (7) dit de chargement et l'autre (8) dit de déchargement,
- au moins deux moyens moteurs (non représentés) pour entraîner à des vitesses différentes chacun des brins précités,
- des moyens 9 pour absorber les variations de longueur des brins du lien sans fin et,
- situé sur le brin de chargement à un poste dit de chargement, un moyen 10 d'ouverture puis de fermeture d'un réceptacle par déviation du dit brin, ce moyen d'ouverture fermeture comprenant un organe 10A de déviation.

Généralement, ce convoyeur est porté par une table 11, c'est à dire qu'une surface d'appui des articles se situe sous les réceptacles.

Les organes 5, 6 de renvoi sont généralement liés par une pièce commune (non représentée) qui est mobile en translation.

Un vérin 9A monté sur un des paliers flottant absorbe les différences de longueurs de brins et maintient en tension le convoyeur.

Sur ce type de convoyeur, les palettes sont très proches car elles doivent pincer le produit lors du transport.

Les organes de renvoi sont montés sur des paliers dits flottants, c'est à dire qui peuvent se déplacer suivant une direction déterminée.

Au poste de chargement, chaque article est introduit dans le réceptacle sous l'effet d'une propulsion induite par un système d'introduction.

Au poste de déchargement, un poussoir vient s'appuyer sur le champs d'un nombre déterminé d'articles plats pour les extraire du convoyeur.

Pendant cette opération, il va de soi que le brin de déchargement doit être immobilisé.

Les deux moyens moteurs, chacun accouplé à l'un des brins de chargement et déchargement, sont commandés par une commande électronique qui synchronise les mouvements et arrêts.

Selon l'invention, l'organe 5 de renvoi situé en aval du poste de chargement est de taille largement supérieure à l'autre organe 6 de renvoi et la position de l'organe 10A de déviation par rapport aux organes 5, 6 de renvoi est fixée pour que la partie du brin 7 de chargement situé en aval de l'organe 10A de déviation soit parallèle au brin 8 de déchargement tandis que la partie du brin de chargement située entre cet organe 10A de déviation et l'autre organe 6 de renvoi est inclinée par rapport au brin de déchargement.

Bien évidemment, on peut admettre que le brin de chargement en aval de l'organe de déviation ne soit pas rigoureusement parallèle au brin de déchargement.

Suivant cette solution, on peut faire appel à un seul organe de déviation pour ouvrir et fermer les palettes.

On introduit les articles dans le compartiment situé juste en amont de la zone du brin de déchargement qui devient parallèle au brin de déchargement de sorte que le réceptacle est immédiatement fermé.

L'angle d'ouverture du réceptacle dépend de la positon de l'organe 6 de renvoi situé en amont du poste de chargement.

Il faut que l'inclinaison entre la partie du brin de chargement en aval et celle en amont de l'organe de déviation soit de l'ordre de 150° pour ouvrir suffisamment le réceptacle.

L'amplitude de déplacement des organes de renvoi 5, 6 est réduite notamment du fait que l'autre organe de renvoi est plus grand donc ce qui réduit la course des paliers flottants.

En augmentant le diamètre de l'organe de renvoi situé entre le poste de chargement et de déchargement, l'amplitude de l'ouverture A de ces réceptacles lors de leurs passages sur cet organe 5 de renvoi est réduite.

Dès lors, l'article est toujours pincé même dans les parties courbes où ce pincement n'est certes réalisé que localement car l'ouverture des palettes est plus limitée mais continue cependant à être actif.

On pourrait donc éventuellement supprimer la table d'appui ou placer ce convoyeur dans un plan vertical.

Par rapport à une installation préalable où le convoyeur forme un triangle déformable, on améliore l'encombrement car on réduit l'amplitude de déplacement des paliers flottants pour une même longueur de lien tout en conservant l'encombrement transverse déterminé par la distance entre le brin de déchargement et l'organe de déviation.

La taille du plus grand organe de renvoi sera d'au moins deux fois celui de l'organe 6.

## Revendications

1. Convoyeur de stockage destiné à une installation de regroupement d'articles plats comprenant :
- un lien (2) sans fin portant extérieurement des palettes (3) perpendiculaires au lien délimitant des réceptacles (4), ce lien circulant entre deux organes (5, 6) de renvoi pour former deux brins (7, 8), l'un (7) dit de chargement et l'autre (8) dit de déchargement,
- au moins deux moyens moteurs pour entraîner à des vitesses différentes chacun des brins précités,
- des moyens (9) pour absorber les variations de longueur des brins du lien sans fin et,
- situé sur le brin de chargement à un poste dit de chargement, un moyen (10) d'ouverture puis de fermeture d'un réceptacle par déviation du dit brin, ce moyen d'ouverture fermeture comprenant un organe (10A) de déviation,
ce convoyeur étant **CARACTERISE en ce que** l'organe (5) de renvoi situé en aval du poste de chargement est de taille largement supérieure à l'autre organe (6) de renvoi et la position de l'organe (10A) de déviation par rapport aux organes (5, 6) de renvoi est fixée pour que la partie du brin (7) de chargement situé en aval de l'organe (10A) de déviation soit parallèle au brin (8) de déchargement tandis que la partie du brin de chargement située entre cet organe (10A) de déviation et l'autre organe (6) de renvoi est inclinée par rapport au brin de déchargement.

2. Convoyeur selon la revendication 1 **caractérisé en ce que** la taille du plus grand organe est d'au moins deux fois celui de l'organe (6).

3. Convoyeur selon la revendication 1 **caractérisé en ce que** l'inclinaison entre la partie du brin de chargement en aval et celle en amont de l'organe de déviation est de l'ordre de 150° pour ouvrir suffisamment le réceptacle.

## Patentansprüche

1. Speicherförderer, der für eine Anlage zum Gruppieren flacher Artikel bestimmt ist, mit:
- einem Endlosband (2), welches außen Schaufeln (3) trägt, die zu dem Band senkrecht verlaufen und Behälter (4) begrenzen, wobei dieses Band zwischen zwei Umlenkorganen (5, 6) umläuft, um zwei Trume (7, 8), einen sogenannten Beladetrum (7) und einen sogenannten Entladetrum (8), zu bilden,
- wenigstens zwei Antriebsmitteln, um einen jeden der vorgenannten Trume mit unterschiedlichen Geschwindigkeiten anzutreiben,
- Mitteln (9), um die Längenänderungen der Trume des Endlosbandes aufzunehmen,
- einem an dem Beladetrum an einer sogenannten Beladestelle angeordneten Mittel (10) zum Öffnen anschließend zum Schließen eines Behälters durch Auslenken des genannten Trums, wobei dieses Mittel zum Öffnen und Schließen ein Auslenkorgan (10A) aufweist,
wobei dieser Förderer **dadurch gekennzeichnet ist, dass** das der Beladestelle nachgeordnete Umlenkorgan (5) weit größer ausgebildet ist als das andere Umlenkorgan (6), und die Position des Auslenkorgans (10A) gegenüber den Umlenkorganen (5, 6) festgelegt ist, damit der Teil des Beladetrums (7), welcher hinter dem Auslenkorgan (10A) gelegen ist, parallel zu dem Entladetrum (8) verläuft, während der Teil des Beladetrums, welcher zwischen diesem Auslenkorgan (10A) und dem anderen Umlenkorgan (6) gelegen ist, gegenüber dem Entladetrum geneigt ist.

2. Förderer nach Anspruch 1, **dadurch gekennzeichnet, dass** das größere Organ wenigstens zwei Mal so groß ist wie das Organ (6).

3. Förderer nach Anspruch 1, **dadurch gekennzeichnet, dass** die Neigung zwischen dem Teil des Beladetrums, der hinter dem Auslenkorgan gelegen ist und demjenigen, welcher vor dem Auslenkorgan gelegen ist, in der Größenordnung von 150° liegt, um den Behälter hinreichend zu öffnen.

## Claims

1. Storage conveyor designed for plant grouping flat articles together, comprising:
- an endless connection (2) carrying on the outside pallets (3) perpendicular to the connection delineating receptacles (4), this connection circulating between two counter-units (5, 6) to form two strands (7, 8), one of these (7) being called the loading strand and the other (8) being called the unloading strand,
- at least two drives to drive each of the above mentioned strands at different speeds,
- means (9) to absorb the variations in length of the strands of the endless connection, and
- located on the loading strand at what is called a loading station, a means (10) of opening and then closing a receptable by diversion of the said strand, this means of opening/closing comprising a diversion unit (10A),
this conveyor being **CHARACTERISED in that** the counter-unit (5) located downstream of the loading station is considerably greater in size than the other counter-unit (6) and the position of the diversion unit (10A) compared with the counter-units (5, 6) is fixed so that the part of the loading strand (7) located downstream of the diversion unit (10A) is parallel to the unloading strand (8) while the part of the loading strand located between this diversion unit (10A) and the other counter-unit (6) is inclined in relation to the unloading strand.

2. Conveyor according to Claim 1, **characterised in that** the size of the larger unit is at least twice that of the unit (6).

3. Conveyor according to Claim 1, **characterised in that** the angle between the part of the loading strand downstream and that upstream of the diversion unit is in the region of 150° in order to open the receptacle sufficiently.
